# EUROPEAN PATENT SPECIFICATION

(11) **EP 2 951 836 B1**
(45) Date of publication and mention of the grant of the patent: **21.06.2017**
(21) Application number: 13717411.6
(22) Date of filing: 20.03.2013
(51) Int. Cl.: G21F 9/02, B01D 59/00, C01B 4/00, B01D 53/00, B01D 59/28

(54) **METHOD AND PRACTICAL DEVICE COMPOSITION FOR PURIFICATION OF AIR FROM GASEOUS TRITIUM AND CONCENTRATION OF TRITIUM IN A CONSTANT VOLUME OF WATER**
VERFAHREN UND PRAKTISCHE VORRICHTUNGSZUSAMMENSETZUNG ZUR REINIGUNG VON LUFT AUS GASFÖRMIGEM TRITIUM UND KONZENTRATION VON TRITIUM IN EINEM KONSTANTEN WASSERVOLUMEN
PROCÉDÉ ET DISPOSITIF POUR LA PURIFICATION D'AIR PAR SÉPARATION DU TRITIUM GAZEUX ET POUR LA CONCENTRATION DE TRITIUM DANS UN VOLUME CONSTANT D'EAU

(30) Priority: 30.01.2013 BG 11138513
(43) Date of publication of application: 09.12.2015
(73) Proprietor: Kasabov, Evgeni Borisov, 1505 Sofia (BG); Shopov, Kliment Nikolaev, 1231 Sofia (BG); Savov, Atanas Blagoev, 1407 Sofia (BG); Minov, Evgeni Manolov, Sofia (BG); Hristova, Sonya Yordanova, Sofia (BG); Neycheva, Maria Ilieva, Sofia (BG); Zlatanov, Ilia Georgiev, Sofia (BG)
(72) Inventor: SPASOV, Ivailo Spasov, Sofia (BG); GYOSHEV, Georgi Stoyanov, 116 (BG); KRIVIROV, Nikola Petrov, Plovdiv (BG)
(74) Representative: Manev, Kostadin Chanev
(86) International application number: PCT/BG2013/000006
(87) International publication number: WO 2014/117229

(56) References cited:
- DE-A1- 3 809 367
- GB-A- 2 021 536
- US-A- 4 304 645

## Description

### TECHNOCAL FIELD

This invention relates to a method and practical device composition for purification of air from tritium in gaseous form (T₂) and concentrating tritium in the form of tritium water (T₂O) or tritiated (HTO) water in common water (H₂O). The method and composition find application in purification of air from tritium in repositories, in which tritium is in form of a gas molecule (T₂), from equipment and facilities for extracting of tritium from facilities for reprocessing of spent nuclear fuel, from equipment and facilities for production and storing of tritium for the needs of thermonuclear reactions.

### BACKGROUND OF THE INVENTION

Due to the extreme mobility of tritium in gaseous form, in the air around the equipment and in the facilities, in which is stored tritium has always monitored the presence of radioactivity.

At present, the problem with the migration of gaseous tritium from different types of equipment, in which it is stored for different purposes, is solved mainly by direct high-temperature oxidation or oxidation in the presence of a catalyst. The obtained tritiated water is separated from the gaseous part by molecular membranes, sorbents and other materials with high water absorbing properties and is stored in that form.

The problem with current methods for purification of gases from tritium is that the obtained secondary radioactive products are with low tritium activity, which leads to accumulation of large quantities of waste for disposal.

There are methods for concentrating tritium in common water through electrolysis, rectification, hydrolysis and membrane diffusion, which represent thermo-sorption processes. They have high energy consumption and relatively low coefficient of concentrating which makes them economically disadvantageous for recovery and concentrating of tritium from volumes of tritium contaminated gases.

### SUMMARY OF THE INVENTION

An object of the invention is to create a method and practical device composition for purification of air from gaseous tritium (T₂) with concentration of tritium in a constant volume of water, whereby to substantially reduce the volume of secondary radioactive products at low energy consumption of the device composition.

This problem is solved with a method for purification of air from gaseous tritium with concentration of tritium in a constant volume of water, comprising the following operations:
- extraction of contaminated air from the equipment contaminated with tritium air;
- feeding of the extracted air in chamber for oxidation of tritium with oxyhydrogen;
- oxidation in the tritium chamber of air in flame of oxyhydrogen, coming from an oxyhydrogen generator;
- pumping out of the chamber to the mixture of air and water vapors of tritiated and tritium water;
- cooling of the water vapors in cooler;
- retention of the condensed water in the water filter;
- returning the purified air in the equipment and
- deionization the water from the water filter for its subsequent feeding with a dosing pump in oxyhydrogen generator and turning it into oxyhydrogen.

In accordance with this method, the consecutive operations are repeatedly performed, forming a cycle, in which the oxyhydrogen obtained in a previous cycle is used in the step of oxidizing tritium in contaminated air, due to which follows an increase of the concentration of tritium in the water of water filter, proportionally to the number of cycles.

This problem is solved and by practical device composition for purification of air from gaseous tritium with concentration of tritium in a constant volume of water, comprising a chamber for oxidation of tritium with oxyhydrogen connected to electromagnetic valve and through the stopcock for an outgoing gas with a filter - condenser.

For its part, the filter 7 is connected directly to oxyhydrogen generator, which is directly connected to the output of dosing pump.

The chamber for tritium oxidation is directly connected to cooler and to a vacuum generator, as the vacuum generator, on one side, through a first stopcock, is connected to equipment with contaminated by tritium air, on the other side through a second stopcock is connected to the output of circulating vacuum pump, and a third is connected to a one-way valve.

The equipment with contaminated by tritium air is connected through a third stopcock to the output of a circulating vacuum pump, whose input is connected directly with filter 12, and its output is connected to the one-way valve.

Furthermore, the filter 12 is directly connected to the air space of water filter, which is directly connected to cooler and to input of the dosing pump, and a fourth stopcock 16.

In such a device composition, all connections between its elements are made through pipelines.

An advantage of the created method and device is ensured a high coefficient of concentration and extraction of tritium from large volumes of contaminated with gases thereof, due to the repeated cycles of operations at low energy consumption.

### DESCRIPTION OF THE ATTACHED FIGURE

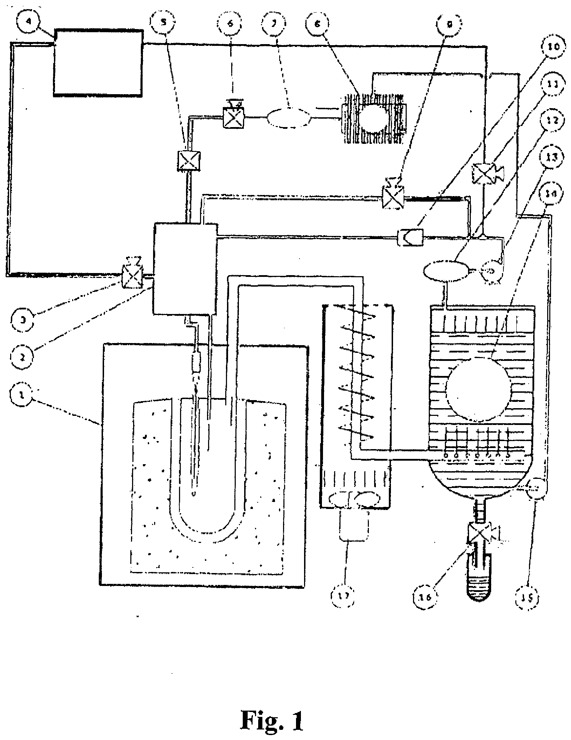

The present invention is illustrated by figure 1, which is a principle schematic of the practical device composition for purification of air from gaseous tritium with a concentration of tritium in a constant volume of water.

### EMBODIMENTS OF THE INVENTION

The established method for purification of air from gaseous tritium with a concentration of tritium in a constant volume of water includes the following operations:
- extraction of contaminated air from the equipment contaminated with tritium air 4;
- feeding of extracted air in the chamber for oxidation of tritium with oxyhydrogen 1;
- tritium oxidation in chamber 1 in flame of oxyhydrogen, coming from an oxyhydrogen generator 8;

- pumping out of the chamber 1 the mixture of air and water vapors of tritiated and tritium water;
- cooling of the water vapors in cooler 17;
- retention of the condensed water in water filter 14;
- returning the purified air in the equipment 4; and
- deionization the water from water filter 14 for its subsequent feeding with a dosing pump 15 in oxyhydrogen generator 8 and turning it into oxyhydrogen.

Initially common water is used for the extraction of tritium from the air. Hydrogen (H₂) from the oxyhydrogen mixture obtained from this water, by which the flame is maintained, is much more than the tritium, that has to be oxidized. The proportion between the quantities of the hydrogen atoms (h) to the tritium atoms (t) is largely in favor of h (h»t).

During the process of oxidation of hydrogen and tritium a mixture of common water and water containing tritium is obtained. This water can exist in two forms - tritiated (HTO) and tritium water (T₂O).

Due to the very large proportion of h compared to t (h>>t) the possibility to obtain tritium water is insignificant, whereby the material balance of the process of oxidation with each cycle is described by the formula:

2hH₂ + 2ntT₂ + (h+nt)O₂ = 2(h-nt)H₂O + 4ntHTO

where: **n**- number of cycles;
**h** - number of hydrogen in the device;
**t -** number of tritium atoms entering the device with each cycle of oxidation

The tritiated water is broken down in the oxyhydrogen generator 8 to oxyhydrogen mixture, containing oxygen molecules (O₂) and molecules of the three hydrogen isotopes (H₂, HT, T₂).

The next volume of gas containing tritium is processed in the flame of the obtained oxyhydrogen mixture from above. That way the concentration of tritium in the volume of common water increases constantly and at the **n**-th cycle it is **n** times higher than in the first one.

Obtaining oxyhydrogen from common, tritiated and tritium water, the pumping out of air containing tritium, oxidation of tritium and the returning of air in the equipment contaminated with tritium air 4 is accomplished using a device composition, the principle schematic of which is described in fig.1

The created device composition is composed of a chamber for oxidation of tritium with oxyhydrogen 1, which by pipeline is connected to the electromagnetic valve 5 and through stopcock for an outgoing gas 6 with a filter 7. In addition, the chamber for oxidation of tritium 1 is directly connected through a pipeline with a cooler 17. The second direct pipeline connection of the chamber 1 is with vacuum generator 2.

The vacuum generator 2, on one side, through pipeline and first cock 3 is connected to equipment with contaminated by tritium air 4, on the other side through pipeline and a second stopcock 9 is connected to the output of a circulating vacuum pump 13, and by a third party by pipeline is connected to the one-way valve 10.

For its part the equipment with contaminated by tritium air 4 is connected through a pipeline and a third stopcock 11 with the output of a circulating vacuum pump 13.

The filter 7 is connected both through a pipeline with stopcock for an outgoing gas 6, and directly to oxyhydrogen generator 8, which in its turn is connected directly through a pipeline with the output of dosing pump 15.

The circulating vacuum pump 13 is connected to the input with a filter - dehumidifier 12 and the output through a pipeline with one-way valve 10.

For its part the filter 12 is directly connected to the air space of water filter 14, which is directly connected to cooler 17 and to the input of the dosing pump, and through a fourth stopcock 16 and a pipeline with a control system of the tritium water (it is not indicated in the figure).

### USAGE OF THE INVENTION

Initially common water is used for the extraction of tritium from the air. Hydrogen (H₂) from the oxyhydrogen mixture obtained from this water, by which the flame is maintained, is much more than the tritium (T₂), that has to be oxidized. The proportion between the quantities of the hydrogen atoms (h) to the tritium atoms (t) is largely in favor of h (h»t).

The air, containing tritium, is extracted from the space, in which it is obtained and stored in the equipment with contaminated by tritium air 4. The air, with concentration of tritium 1.10⁴ Bq/m³, is constantly pumped out by a circulating vacuum pump 13 with a capacity of 1 m³/h and is fed to a chamber (1) with dimensions of d=300 mm and L=250 mm for oxidation of tritium with oxyhydrogen 1 for burning. In the chamber 1 the air is treated with a flow of burning oxyhydrogen, coming from oxyhydrogen generator (8), with a delivery rate of 1001/h at a temperature of 1000-1300 °C, whereby tritium is oxidized. The obtained mixture of air and water vapors from tritiated and tritium water is pumped out of the oxidation chamber 1 and is cooled in the cooler 17. The air purified of water vapors is returned through the circulating vacuum pump 13 in in the equipment with contaminated by tritium air 4. After the cooling the obtained water vapors are separated into the water filter 14, containing 500 grams of water. After that way of purification of 200 m³ of air, the water from the water filter 14 is deionized and is fed periodically by the dosing pump 15 in portions in generator producing oxyhydrogen 8. In the generator 8 the water is transformed to gaseous oxyhydrogen mixture with oxygen and hydrogen in stoichiometric proportion. The oxyhydrogen mixture is fed under minimal overpressure in the oxidation chamber of tritium with oxyhydrogen 1. By obtained gas is oxidized tritium from next portion of air, containing tritium. This cycle can be repeated an unlimited number of times where the concentration of tritium in the water of water filter 14 increases proportionally with the increase in the number of cycles.

For example, the cycle of breaking down of tritiated water to oxyhydrogen, extraction of tritium from gaseous mixtures, separation of the tritiated water from gas and obtaining oxyhydrogen again from it is repeated 200 times. In this case, the concentration of tritium in the water of the water filter 14 is increased by a coefficient of 200 compared to the first cycle, if the initial concentration of tritium in the air is kept constant and reaches 4.10⁶ Bq /kg H₂O.

### LEGEND

- 1.: Chamber for tritium oxidation with oxyhydrogen.
- 2.: Vacuum generator.
- 3.: First stopcock.
- 4.: Equipment with contaminated by tritium air.
- 5.: Electromagnetic valve.
- 6.: Stopcock for outgoing gas.
- 7.: Filter - condenser.
- 8.: Oxyhydrogen Generator.
- 9.: Second stopcock.
- 10.: One-way valve.
- 11.: Third stopcock.
- 12.: Filter - dehumidifier.
- 13.: Circulating vacuum pump.
- 14.: Water filter.
- 15.: Dosing pump.
- 16.: Fourth stopcock.
- 17.: Cooler.

### REFERENCES

1. Myung W. Lee, Thermal Cycling Absorption Process-A New Way to Separate Hydrogen Isotopes, WSRC-MS-2000-00061
2. 2009 Evaluation of Tritium Removal and Mitigation Technologies for Wastewater Treatment
3. A.J. Egorov, V.M. Tyunis, DEACTIVATION OF TRITIUM CONTAINING WATERS BY RECTIFICATION METHODS
4. IAEA, TECHNICAL REPORTS SERIES No. 42, MANAGEMENT OF WASTE CONTAINING TRITIUM AND CARBON-14, Vienna, 2004
5. A. N. PEREVEZENTSEV at all,, WET SCRUBBER COLUMN FOR AIR DETRITIATION, FUSION SCIENCE AND TECHNOLOGY VOL. 56 NOV. 2009
6. Patent 5591319, Electrolytic pre-enrichment method and apparatus for the combined electrolysis and catalytic exchange process, 1997
7. Patent 4190515, Apparatus for removal and recovery of tritium from light and heavy water, 1980
8. DOE-HDBK-1129-99, DOE HANDBOOK TRITIUM HANDLING AND SAFE STORAGE, 1999

## Claims

1. **Method for purification of air from gaseous tritium with concentration of tritium in a constant volume of water, characterized in that it** comprises the following operations:
- extraction of contaminated air from the equipment contaminated with tritium air (4);
- feeding of the extracted air in chamber for oxidation of tritium with oxyhydrogen (1);
- oxidation of tritium in contaminated air in chamber (1) in flame of oxyhydrogen, coming from an oxyhydrogen generator (8);
- pumping out of the chamber (1) to the mixture of air and water vapors of tritiated and tritium water;
- cooling of the water vapors in cooler (17);
- retention of the condensed water in water filter (14);
- returning the purified air in the equipment (4); and
- deionization the water from the water filter (14) for its subsquent feeding with a dosing pump (15) in the oxyhydrogen generator (8) and turning it into oxyhydrogen.

2. Method according to claim 1, **characterized in that**
- the consecutive operations according to claim 1 are repeatedly performed, forming a cycle, in which the oxyhydrogen obtained in a previous cycle is used in the step of oxidizing tritium in contaminated air, due to which follows
- an increase of the concentration of tritium in the water of water filter (14), proportionally to the number of cycles.

3. **Device composition for purification of air from gaseous tritium with concentration of tritium in a constant volume of water,** for implementing the method according to claim 1, **characterized in that it** composed of a chamber for oxidation of tritium with oxyhydrogen (1), connected to electromagnetic valve (5) and through stopcock for an outgoing gas (6) with a filter (7), directly connected to oxyhydrogen generator (8), which in its turn is connected directly with the output of dosing pump (15), wherein the chamber for oxidation of tritium (1) is directly connected to cooler (17) and with vacuum generator (2), as the vacuum generator (2), on one side, through first stopcock (3) is connected to equipment with contaminated by tritium air (4), on the other side through second stopcock (9) is connected to the output of a circulating vacuum pump (13), and by a third party is connected to one-way valve (10), wherein the equipment with contaminated by tritium air (4) is connected through third stopcock (11) with the output of a circulating vacuum pump (13) which input is directly connected with a filter - dehumidifier (12) and its output is directly connected with one-way valve (10), as the filter (12) is directly connected to the air space of the water filter (14), which is directly connected to cooler (17) and to the input of the dosing pump (15), and a fourth stopcock (16).

4. Device, according to claim 3, **characterized in that** all the connections between its elements are performed by pipelines.

## Patentansprüche

1. **Ein Verfahren zur Luftreinigung von gasförmigem Tritium mit einer Tritium-Konzentration in einem konstanten Volumen von Wasser, gekennzeichnet dadurch, dass** es die folgenden Operationen umfasst:
- Absaugung von verseuchter Luft aus der Ausrüstung, kontaminiert mit Tritiumluft (4);
- Vorschub der abgesaugten Luft in die Kammer für die Oxidation von Tritium mit Oxyhydrogen (1);
- Oxidation von Tritium in der verunreinigten Luft in der Kammer (1) in der Oxyhydrogenflamme, kommend aus dem Oxyhydrogengenerator (8);
- Pumpen aus der Kammer (1) der Mischung aus Luft und Wasserdampf mit Tritium und Wasser mit Tritium;
- Abkühlen des Wasserdampfs im Kühler (17);
- Beibehaltung des kondensierten Wassers in dem Wasserfilter (14);
- Rückkehr der gereinigten Luft in die Anlage (4); und
- Entionisierung des Wassers aus dem Wasserfilter (14) für seinen nachfolgenden Vorschub mit einer Dosierpumpe (15) in den Oxyhydrogengenerator (8) und seiner Umwandlung in Oxyhydrogen.

2. Ein Verfahren nach Anspruch 1, **gekennzeichnet dadurch, dass**
- aufeinanderfolgende Operationen nach Anspruch 1, bildend einen Zyklus, bei dem Oxyhydrogen, erhalten in einem vorherigen Zyklus, in der Oxidationsstufe von Tritium in der verunreinigten Luft verwendet wird, wiederholt ausgeführt werden, und deshalb
- eine Erhöhung der Tritiumkonzentration im Wasser des Wasserfilters (14) im Verhältnis zu der Anzahl der Zyklen folgt.

3. **Zusammensetzung der Vorrichtung zur Reinigung der Luft von gasförmigem Tritium mit einer Tritiumkonzentration in einem konstanten Wasservolumen** zur Durchführung eines Verfahren nach Anspruch 1, **gekennzeichnet dadurch, dass** es aus einer Kammer zur Oxidation des Tritiums mit Sauerstoff (1) besteht, verbunden zu einem Magnetventil (5) und durch ein Absperrventil für das Auslassgas (6) mit einem Filter (7), verbunden direkt zum Oxyhydrogengenerator (8), der wiederum direkt mit dem Ausgang der Dosierpumpe (15) verbunden ist, wobei die Kammer für die Oxidation von Tritium (1) direkt mit dem Kühler (17) und mit einem Vakuumgenerator (2) verbunden ist, wobei der Vakuumgenerator (2), auf der einen Seite, durch das erste Absperrventil (3) mit einer Anlage verbunden ist, die mit Tritiumluft (4) kontaminiert ist, auf der anderen Seite, durch das zweite Absperrventil (9) mit dem Ausgang der Zirkulationsvakuumpumpe (13) verbunden ist, und auf dritten Seite, mit dem Einwegventil (10) verbunden ist, wobei die Ausrüstung, die mit Tritiumluft (4) kontaminiert ist, durch das dritte Absperrventil (11) mit dem Ausgang der Zirkulationsvakuumpumpe (13) verbunden ist, dessen Eingang direkt mit deinem Filter- Trockner (12) verbunden ist, und sein Ausgang direkt mit einem Einwegventil (10) verbunden ist, weil der Filter (12) direkt mit dem Luftraum des Wasserfilters (14) verbunden ist, der direkt zum Kühler (17) und zum Eingang der Dosierpumpe (15) und einem vierten Absperrventil (16) verbunden ist.

4. Eine Vorrichtung nach Anspruch 3, **gekennzeichnet dadurch, dass** alle Verbindungen zwischen ihren Elementen durch Rohrleitungen durchgeführt werden.

## Revendications

1. **Procédé de purification de l'air du tritium gazeux avec une concentration de tritium dans un volume d'eau constant, caractérisé en ce qu'**il comprend les opérations suivantes:
- extraction de l'air contaminé de l'équipement contaminé par de l'air de tritium (4);
- alimentation de l'air extrait dans la chambre pour l'oxydation du tritium avec de l'oxyhydrogène (1);
- oxydation du tritium dans l'air contaminé dans la chambre (1) à la flamme de l'oxyhydrogène, provenant d'un générateur d'oxyhydrogène (8);
- pompage de la chambre (1) au mélange d'air et de vapeurs d'eau tritiée et d'eau avec tritium;
- refroidissement des vapeurs d'eau dans le refroidisseur (17);
- rétention de l'eau condensée dans le filtre à eau (14);
- retour de l'air purifié dans l'équipement (4); et
- déioniser l'eau du filtre à eau (14) pour son alimentation ultérieure avec une pompe doseuse (15) dans le générateur d'oxyhydrogène (8) et sa transformation en oxyhydrogène.

2. Procédé selon la revendication 1, **caractérisé en ce que**
- les opérations consécutives selon la revendication 1 sont exécutées de façon répétée, formant un cycle dans lequel l'oxyhydrogène obtenu dans un cycle précédent est utilisé dans l'étape consistant à oxyder le tritium dans l'air contaminé, en raison de laquelle suit;
- une augmentation de la concentration de tritium dans l'eau du filtre à eau (14), proportionnellement au nombre de cycles.

3. **Composition de l'appareil pour la purification de l'air du tritium gazeux avec une concentration de tritium dans un volume d'eau constant,** pour la mise en oeuvre du procédé selon la revendication 1, **caractérisé en ce qu'**il consiste en une chambre pour l'oxydation du tritium avec un oxyhydrogène (1), relié à la soupape électromagnétique (5) et à travers un robinet d'arrêt pour un gaz sortant (6) avec un filtre (7), directement relié au générateur d'oxyhydrogène (8) qui, à son tour, est relié directement à la sortie de la pompe doseuse (15), la chambre d'oxydation du tritium (1) est directement relié au refroidisseur (17) et au générateur de vide (2), car le générateur de vide (2), d'un côté, par le premier robinet d'arrêt (3) est relié à de l'équipement avec de l'air tritium (4) de l'autre côté par l'intermédiaire d'un deuxième robinet d'arrêt (9) est relié à la sortie d'une pompe à vide circulante (13), et par un tiers est relié à une soupape unidirectionnelle (10), l'équipement contaminé par de l'air de tritium (4) est relié par un troisième robinet d'arrêt (11) avec la sortie d'une pompe à vide circulante (13), laquelle entrée est directement reliée à un filtre déshumidificateur (12) et sa sortie est directement reliée à la soupape unidirectionnelle (10), le filtre (12) est directement relié à l'espace d'air du filtre à eau (14), qui est directement relié à refroidisseur (17) et à l'entrée de la pompe doseuse (15) et un quatrième robinet d'arrêt (16).

4. **Appareil** selon la revendication 3, **caractérisé en ce que** toutes les connexions entre ses éléments sont réalisées par des pipelines.
